# EUROPÄISCHE PATENTSCHRIFT

(11) **EP 0 644 668 B1**
(45) Veröffentlichungstag und Bekanntmachung des Hinweises auf die Patenterteilung: **31.07.2002**
(21) Anmeldenummer: 93114859.7
(22) Anmeldetag: 15.09.1993
(51) Int. Cl.: H04B 10/24

(54) **Sende- und Empfangsmodul für eine bidirektionale optische Mehrkanal-Übertragung**
Transmitting and receiving module for bidirectional optical multichannel transmission
Module d'émmission-réception pour transmission bidirectionnelle optique à plusieurs canaux

(43) Veröffentlichungstag der Anmeldung: 22.03.1995
(73) Patentinhaber: Infineon Technologies AG, 81669 München (DE)
(72) Erfinder: Althaus, Hans-Ludwig, Dr. rer. nat., D-93138 Lappersdorf (DE); Panzer, Klaus, Dr.-Ing., D-93049 Regensburg (DE)
(74) Vertreter: Fischer, Volker, Dipl.-Ing.

(56) Entgegenhaltungen:
- EP-A- 0 463 214
- EP-A- 0 487 391
- DE-A- 4 214 791
- PATENT ABSTRACTS OF JAPAN vol. 11, no. 293 (P-619)22. September 1987 & JP-A-62 089 008 (NEC)

## Beschreibung

Die Erfindung betrifft einen Sende- und Empfangsmodul für eine bidirektionale optische Nachrichten- und Signalübertragung nach dem Oberbegriff des Anspruchs 1.

Ein derartiger Sende- und Empfangsmodul geht aus der EP-A-0 238 977 als bekannt hervor. Dieser Modul ist für ein bidirektionales optisches Kommunikationsnetz, insbesondere für ein Breitband-ISDN vorgesehen. Um diesen Modul dejustagesicher auszugestalten, sind der optische Sender (Laserdiode) und eine diesem naheliegende Linse als Koppeloptik auf einem gemeinsamen Trägerkörper relativ zueinander dejustagesicher fixiert. Zumindest der Lichtsender (Laserdiode), die sendernahe Linse, eine Lichtstrahltrenneinrichtung (Strahlteiler) und der Lichtempfänger (Detektor) sind in einem Gehäuse aufgenommen, an das ein Ende einer optischen Faser anschließbar ist. Zum Schutz gegen störende Umwelteinflüsse, insbesondere der im Gehäuse untergebrachten aktiven Halbleiterbauelemente (Lichtsender und Empfänger) muß das gemeinsame Gehäuse allerdings hermetisch dicht sein.

In dem Dokument EP 0487391 A ist ebenfalls ein gattungsgemäßes Sende- und Empfangsmodul angegeben. Dort sind zur Bereitstellung einer bidirektionalen Datenübertragung zwei Lichtempfänger und zwei Lichtsender, ein Faseranschluß für eine gemeinsame Lichtleitfaser, optische Linsenkoppler und im freien Strahlengang zwischengeordnete Interferenzfilter vorgesehen.

Aus der EP-A-0 463 214 ist ein Sende- und Empfangsmodul (Transceiver) für eine bidirektionale optische Nachrichtenund Signalübertragung bekannt, bei dem die aktiven Bauelemente (Lichtsender und Lichtempfänger) als eigenständige Bauelemente hermetisch dicht abgekapselt in ein gemeinsames Modulgehäuse eingebaut sind, in dessen Hohlrauminneren ein Strahlteiler und eine Linsenkoppeloptik angeordnet sind, und das einen Faseranschluß für eine gemeinsame Lichtleitfaser aufweist.

Derartige Sende- und Empfangsmodule sind Schlüsselbauelemente für die optische Übertragung im Teilnehmerbereich von Telekommunikationssystemen, beispielsweise in Breitband-ISDN-Netzen. Besonders vorteilhaft bei der Anwendung optischer Übertragungstechnik im Teilnehmeranschluß ist die bidirektionale Übertragung auf nur einer Lichtleitfaser. Für die Trennung der entgegengesetzt laufenden Nachrichtensignale an den Enden der Lichtfaserstrecke eignet sich ein derartiger Modul besonders, zumal er die bisher erforderliche diskrete Lösung aus Sender, Empfänger und Spiegel zur Strahltrennung ersetzt. Der Spiegel bzw. Strahlteiler erlaubt sowohl die Übertragung mit verschiedenen Wellenlängen, für die er als wellenlängenselektives Filter (Wellenlängenmultiplex) ausgeführt ist, als auch bei gleicher Wellenlänge, für die er teildurchlässig (beam splitting) ist. In beiden Fällen läßt der Teiler das Sendesignal durch und koppelt das Empfangssignal über Reflexion aus.

Da bei Telekommunikationssystemen für die interaktiven Dienste in zwei Richtungen übertragen werden muß, benutzt man hierfür zwei verschiedene optische Wellenlängen. Um diese Wellenlängen in einfacher Weise trennen zu können, sollten sie möglichst weit auseinander liegen, zweckmäßig z.B. bei 1300nm und 1550nm. Zusätzliche Dienste, wie Verteilfernsehen, müssen auf anderen Wellenlängen untergebracht werden. Für die Verteildienste wird bisher ein zusätzliches Glasfasernetz verwendet, in dem man bezüglich der Wahl der Wellenlänge frei ist.

Der Erfindung liegt die Aufgabe zugrunde, einen optischen Sende- und Empfangsmodul der eingangs genannten Art so auszubilden, daß dieser Modul eine bidirektionale optische Mehrkanal-Übertragung bei kompakter Bauform ermöglicht.

Diese Aufgabe wird erfindungsgemäß durch einen Sende- und Empfangsmodul mit den Merkmalen der Ansprüche 1 sowie 2 gelöst.

Vorteilhafte Ausgestaltungen bzw. Weiterbildungen der Erfindung sind Gegenstand zusätzlicher Ansprüche.

Die mit der Erfindung erzielten Vorteile bestehen insbesondere darin, daß mit dem erfindungsgemäßen Transceiver-Modul alle Telekommunikationsdienste, d.h. interaktive Dienste und Verteildienste auf einer Lichtleitfaser zum Teilnehmer gebracht werden können. Das wird dadurch ermöglicht, daß für die interaktiven Dienste vorzugsweise ein dichtes WDM (Wavelength Division Multiplexing) im Bereich von 1300nm vorgenommen wird, während die Verteildienste dann zweckmäßig auf einer optischen Wellenlänge von 1550nm übertragen werden können. Die integrierte Modulbauweise der hierzu verwendeten Bauteile verkleinert den Platzbedarf, verkürzt die Montagezeit und reduziert den Bauteilaufwand. Durch den Einsatz von Laser- und Fotodioden als Serienkomponenten wird eine kostengünstige Fertigung ermöglicht. Beide Diodenarten können vorzugsweise in der TO-Standardbauform ausgeführt sein und bilden zusammen mit den im freien Strahlengang angeordneten Strahlteilern die Grundelemente des Transceiver-Moduls.

Dadurch, daß der Modul für bidirektionale Übertragung beispielsweise um einen weiteren Empfänger für die Verteildienste erweitert ist, ergibt sich eine kompakte Empfangsanordnung für alle Dienste auf der Teilnehmerseite.

Der erfindungsgemäße Modul umfaßt auch die Austauschbarkeit der einzelnen Empfänger- und Sendersubkomponenten, z.B. Detektor mit TO-Gehäuse und Emitter mit TO-Gehäuse, gegeneinander. Hierbei ist auch ein entsprechender Austausch bzw. eine entsprechende Auslegung der Stranlteiler, z.B. WDM-Filter, möglich.

Der erfindungsgemäße Modul besteht beispielsweise aus dem Grundaufbau, der einen Lichtsender, einen Lichtempfänger und einen Strahlteiler umfaßt und der um mindestens eine Detektor- oder auch Sender-Subkomponente für den Licntempfang oder die Lichtemission in den entsprechenden Wellenlängenbereichen erweitert ist.

Die Erweiterung der Anwendungsmöglicnkeiten des erfindungsgemäßen Moduls ist damit nicht erschöpft. Vorteilhaft lassen sicn z.B. in axialer Faserrichtung mindestens eine Subkomponente und senkrecnt dazu mindestens zwei Subkomponenten im Modulgehäuse anbringen. So kann der Mehrkanal-Transceiver-Modul mit einem Sendekanal und zwei oder mehr Empfangskanälen oder auch mit einem Empfangskanal (Detektor) und zwei oder mehr Sendekanälen (Emittern) betrieben werden. Möglich ist auch eine Erweiterung auf mehrere Sendeund Empfangskanäle. Voraussetzung für den Betrieb aller Varianten ist eine entsprechende Auslegung der zugeordneten Strahlteiler (z.B. WDM-Filter). Hierbei können alle bei der optischen Übertragung möglichen Wellenlängen benutzt werden.

Es gelten für diese Module alle Anschlußmöglichkeiten an die Glasfaser wie bei bekannten Modulen, z.B. durch Steckverbindungen, wenn am Modulgenäuse eine Steckerbuchse vorgesehen ist, oder durch Verspleißen, wenn der Modul-Faseranschluß in Form eines sogenannten Pigtails vorhanden ist.

Anhand von in den Figuren der Zeichnung dargestellten Ausführungsbeispielen wird die Erfindung im folgenden näher erläutert. Es zeigen
- FIG 1: eine Ausführungsform des Menrkanal-Moduls und
- FIG 2: eine weitere Ausfünrungsform des Menrkanal-Moduls schematisch in Seitenansicht.

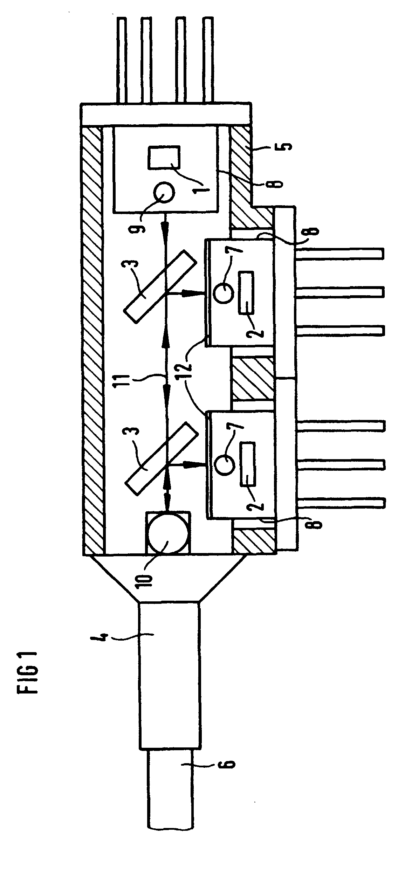

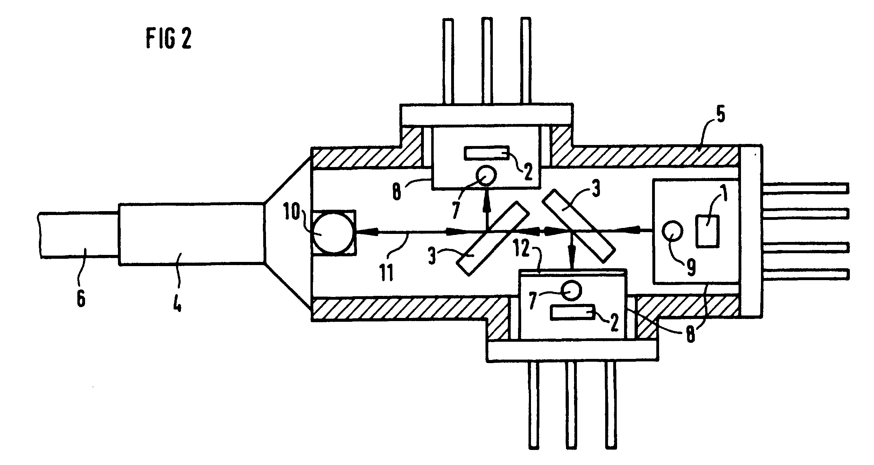

Die in den FIG 1 und 2 dargestellten Sende- und Empfangsmodule für eine bidirektionale optische Mehrkanal-Übertragung von Nachrichten und Signalen bestenen im wesentlicnen aus einem Licntsender 1, zwei Lichtempfängern 2, einem Faseranschluß 4 für eine gemeinsame Lichtleitfaser 6, einer Linsenkoppeloptik 7, 9, 10 und zwei im freien Stranlengang 11 zwischengeordneten Straniteilern 3, die in einem gemeinsamen Gehäuse 5 angeordnet sind, das zweckmäßig aus Metall besteht.

Der Lichtsender 1 und die Lichtempfänger 2 sind jeweils ein eigenständiges Bauelement bildend von einer Einkapselung 8 umgeben. Diese eigenständigen Bauelemente 1, 2 sind mit ihren Einkapselungen 8 in das gemeinsame Genäuse 5 mit den beiden Straniteilern 3 und der Linsenkoppeloptik, beispielsweise den Kugellinsen 7, 9, 10 eingebaut.

Als Licntsender 1 wird zweckmäßig eine Laserdiode und als Lichtempfänger 2 werden zweckmäßig Fotodioden verwendet. Sowohl Laserdiode als auch Fotodioden sind vorzugsweise jeweils in TO-Gehäuse eingebaut, welche die Einkapselungen 8 dieser zweckmäßig in Standardausführung verwendeten Optonalbleiter bilden. Der bzw. die Lichtempfänger 2 sind dabei mit einer nicnt dargestellten Verstärkerschaltung verbunden, die vorzugsweise innerhalb der Einkapselung 8 vorgesehen ist. Zweckmäßigerweise befindet sich auch die Linsenkoppeloptik 7 für den bzw. die Lichtempfänger 2 innerhalb der Einkapselung 8. Die Koppeloptik 7 kann beispielsweise eine interne Kugellinse sein. Die Koppeloptik 7 kann aber beispielsweise auch Teil der Einkapselung 8 sein, denn die Einkapselung 8 besitzt als Lichtöffnung z.B. eine Planfensterkappe, die sich auch linsenförmig ausbilden läßt. Auch die Linsenkoppeloptik 9 für den Lichtsender 1 kann innerhalb oder außerhalb dessen Einkapselung 8 angeordnet oder Teil dessen Einkapselung 8 sein. Die Linsenkoppeloptik 10 für die gemeinsame Lichtleitfaser 6 ist innerhalb des gemeinsamen Gehäuses 5 im freien Strahlengang 11 in der Nähe des Endes der Lichtleitfaser 6 in Form einer Kugellinse angeordnet. Die Kugellinse 10 kann allerdings bei entsprechender Auslegung der gesamten Koppeloptik auch wegfallen.

Die gemeinsame Lichtleitfaser 6 kann sowohl fest als auch lösbar (Steckerbuchse) am gemeinsamen Gehäuse 5 fixiert sein. Die Fixierung der einzelnen Subbaugruppen (Sendeund Empfängereinheiten) kann vorzugsweise durch Laserschweißen an das Modulgehäuse erfolgen, das entsprechende Öffnungen (Bohrungen) zur Aufnahme der eigenständigen Bauelemente aufweist. Gemäß einer Ausgestaltung der Erfindung kann am gemeinsamen Gehäuse 5 ein weiterer Faseranschluß vorgesehen sein, so daß auch ein externer Lichtempfänger an den Transceivermodul anschließbar ist.

Die beiden Strahlteiler 3 bilden eine optische Trenneinrichtung für verschiedene oder gleiche Lichtwellenlängen. Für verschiedene Lichtwellenlängen von Sende- und Empfangszweig, d.h. wenn der Strahlteiler 3 wellenlängenselektiv arbeitet, kann eine Trennung von größer als 95 Prozent erreicht werden. Bei gleicher Wellenlänge kann für beide Zweige z.B. eine 50-prozentige oder andere Trennung eingestellt werden.

Bei dem in FIG 1 dargestellten Modul sind im Strahlengang 11 in axialer Richtung der Lichtleitfaser 6 im Gehäuse 5 zwischen Faseranschluß 4 und gegenüberliegendem Lichtsender 1 zwei Strahlteiler 3 hintereinander und parallel zueinander angeordnet. Die Strahlteiler 3 sind dabei zum Strahlengang 11 in einem Winkel von 45° geneigt und lassen Licht gleicher oder verschiedener Wellenlänge teilweise durch und lenken es teilweise um. Die Strahlteiler 3 sind zweckmäßig so ausgelegt, daß sie das Sendesignal durchlassen und die Empfangssignale auskoppeln. Die Empfangssignale werden dabei von den Strahlteilern 3 in einem Winkel von 90° reflektiert und auf die beiden zugeordneten, rechtwinklig zur Faser-Sender-Achse bzw. zum Hauptstrahlengang 11 im Gehäuse 5 angebrachten Lichtempfänger 2 umgelenkt.

Bei dem in FIG 2 dargestellten Modul werden die gleichen Einzelbauelemente wie bei dem in FIG 1 gezeigten Modul verwendet. Auch in ihren Funktionen unterscneiden sich diese Elemente nicht. Der wesentliche Unterschied der Modulausführung nach FIG 2 besteht in der besonders günstigen Anordnung der Strahlteiler 3 und der zugeordneten Lichtempfänger 2 sowie in der damit verbundenen Verbesserung des Platzbedarfs. In diesem Beispiel sind die beiden Strahlteiler 3 im Strahlengang 11 wiederum hintereinander, aber gekreuzt zueinander angeordnet, so daß die Licntumlenkung zwar wiederum in einem Winkel von 90° zur Achse Lichtleitfaser 6 - Lichtsender 1 bzw. Strahlengang 11 erfolgt, allerdings in zwei entgegengesetzte Richtungen auf die zwei auf gegenüberliegenden Seiten des Gehäuses 5 an- bzw. zugeordneten Lichtempfänger 2.

Bei diesen Mehrkanal-Transceiver-Modulen emittiert der Lichtsender 1 beispielsweise Licht mit etwa 1300nm Emissionswellenlänge. Der sendernahe Strahlteiler 3 ist beispielsweise ein WDM-Filter im Bereich von 1300nm mit zugeordnetem 1300nm-Detektor (Lichtempfänger). Der andere, dem Ende der Lichtleitfaser 6 bzw. deren Koppeloptik (Kugellinse 10) benachbarte Strahlteiler 3 ist z.B. ein WDM-Filter im Bereich von 1550nm mit zugeordnetem 1550nm-Detektor (Lichtempfänger 2). Dadurch, daß der Modul nach dem Freistrahlkonzept aufgebaut ist, lassen sich in den freien Strahlengang im Gehäuse 5 sehr leicht z.B. kostengünstige Filterplättchen als Strahlteiler 3 zum Trennen der optiscnen Kanäle einbringen. Insbesondere zum Unterdrücken eines störenden Übersprechens kann es vorteilhaft sein, bei Verwendung eines wellenlängenselektiven Strahlteilers 3 dem diesen zugeordneten Lichtempfänger 2 ein Sperrfilter 12 vorzuschalten, das nur für die gewünschte Wellenlänge durchlässig ist. Das Sperrfilter 12 kann dabei ein Einzelbauteil sein. Es kann aber auch Bestandteil des Licntempfängers 2 selbst sein, wenn z.B. dessen Planfenster durch ein Sperrfilter ersetzt wird.

In den Ausführungsbeispielen gemäß FIG 1 und 2 können beide Strahlteiler 3 als wellenlängenselektives Filter (WDM) ausgebildet sein. Den beiden Lichtempfängern 2 sind dann zweckmäßig jeweils ein Sperrfilter 12 vorgeschaltet. Es kann aber auch vorteilhaft sein, nur für den einen Strahlteiler 3 ein WDM-Filter zu benutzen und für den anderen Strahlteiler 3 einen teildurcnlässigen Spiegel (beam splitter) zu verwenden. In diesem Fall braucht nur ein Sperrfilter 12 vor dem Lichtempfänger 2 vorgesehen sein, der dem WDM-Filter zugeordnet ist.

## Patentansprüche

1. Sende- und Empfangsmodul für eine bidirektionale optische Nachrichten- und Signalübertragung mit einem Lichtsender, mehreren Lichtempfängern, einem Faseranschluß für eine gemeinsame Lichtleitfaser, einer Linsenkoppeloptik und mit im freien Strahlengang zwischengeordneten Strahlteilern, die in einem gemeinsamen Gehäuse angeordnet sind,
**dadurch gekennzeichnet, daß**
im Strahlengang (11) in axialer Richtung der Lichtleitfaser (6) im Gehäuse (5) zwischen Faseranschluß (4) und gegenüberliegendem Lichtsender (1) zwei hintereinander und gekreuzt zueinander in einem Winkel von 45° zum Strahlengang (11) geneigte Strahlteiler (3) angeordnet sind, die Licht gleicher oder verschiedener Wellenlänge teilweise durchlassen und teilweise auf je einen, in einem Winkel von 90° zum Strahlengang (11) dem jeweiligen Strahlteiler (3) zugeordneten Lichtempfänger (2) umlenken, und daß sich Einkapselungen (8) der Lichtempfänger (2) in axialer Richtung überlappen.

2. Sende- und Empfangsmodul für eine bidirektionale optische Nachrichten- und Signalübertragung mit einem Lichtsender, mehreren Lichtempfängern, einem Faseranschluß für eine gemeinsame Lichtleitfaser, einer Linsenkoppeloptik und mit im freien Strahlengang zwischengeordneten Strahlteilern, die in reinem gemeinsamen Gehäuse angeordnet sind,
**dadurch gekennzeichnet, daß**
im gemeinsamen Gehäuse (5) mindestens ein weiterer Lichtsender (1) und/oder Lichtempfänger (2) mit zugehöriger Linsenkoppeloptik (7) und mindestens ein weiterer Strahlteiler (3) vorgesehen sind und daß die Strahlteiler (3) in axialer Richtung der Lichtleitfaser hintereinander angeordnete wellenlängenselektive Filter sind, denen jeweils quer zur axialen Richtung angeordnete Lichtsender (1) und/oder Lichtempfänger (2) zugeordnet sind und die Licht mit einer den jeweiligen Lichtsendern (1) und/oder Lichtempfängern (2) zugeordneten Lichtwellenlänge selektiv reflektieren.

3. Modul nach Anspruch 1 oder 2,
**dadurch gekennzeichnet,**
**daß** die Lichtsender (1) und die Lichtempfänger (2) jeweils ein eigenständiges Bauelement bildend von einer Einkapselung (8) umgeben sind, und daß diese eigenständigen Bauelemente (1; 2) mit ihren Einkapselungen (8) in das gemeinsame Gehäuse (5) mit den Strahlteilern (3) und der Linsenkoppeloptik (7) eingebaut sind.

4. Modul nach einem der Ansprüche 1 bis 3,
**dadurch gekennzeichnet,**
**daß** der Lichtsender (1) eine Laserdiode, der Lichtempfänger (2) eine Fotodiode und deren Einkapselung (8) jeweils ein TO-Gehäuse ist.

5. Modul nach einem der Ansprüche 1 bis 4,
**dadurch gekennzeichnet,**
**daß** die Strahlteiler (3) eine bestimmte Lichtwellenlänge in einem vorgegebenen Verhältnis aufteilen.

6. Modul nach einem der Ansprüche 1 bis 4,
**dadurch gekennzeichnet,**
**daß** die Strahlteiler (3) wellenlängenselektive Strahlteiler sind.

7. Modul nach einem der Ansprüche 1 bis 6,
**dadurch gekennzeichnet,**
**daß** der Lichtempfänger (2) in seiner Einkapselung (8) mit einer Verstärkerschaltung versehen ist.

8. Modul nach einem der Ansprüche 1 bis 7,
**dadurch gekennzeichnet,**
**daß** der Lichtempfänger (2) in seiner Einkapselung (8) mit einer Linsenkoppeloptik (7) versehen ist.

9. Modul nach einem der Ansprüche 1 bis 8,
**dadurch gekennzeichnet,**
**daß** die Lichtleitfaser (6) eine Linsenkoppeloptik (10) aufweist, die im gemeinsamen Gehäuse (5) angeordnet ist.

10. Modul nach einem der Ansprüche 1 bis 9,
**dadurch gekennzeichnet,**
**daß** die Linsenkoppeloptik (9) für den Lichtsender (1) innerhalb oder außerhalb dessen Einkapselung (8) angeordnet oder Teil dessen Einkapselung ist.

11. Modul nach einem der Ansprüche 1 bis 10,
**dadurch gekennzeichnet,**
**daß** im gemeinsamen Gehäuse (5) ein weiterer Faseranschluß zum Anschließen eines externen Lichtempfängers vorgesehen ist.

12. Modul nach einem der Ansprüche 2 bis 11,
**dadurch gekennzeichnet,**
**daß** im Strahlengang (11) in axialer Richtung der Lichtleitfaser (6) im Gehäuse (5) zwischen Faseranschluß (4) und gegenüberliegendem Lichtsender (1) zwei hintereinander und parallel zueinander in einem Winkel von 45° zum Strahlengang (11) geneigte Strahlteiler (3) angeordnet sind, die Licht gleicher oder verschiedener Wellenlänge teilweise durchlassen und teilweise auf je einen, in einem Winkel von 90° zum Strahlengang (11) dem jeweiligen Strahlteiler (3) zugeordneten Lichtempfänger (2) umlenken.

13. Modul nach Anspruch 1 oder 12,
**dadurch gekennzeichnet,**
**daß** der eine im Strahlengang (11) angeordnete Strahlteiler (3) ein wellenlängenselektiver Strahlteiler ist, und daß der andere im Strahlengang (11) angeordnete Strahlteiler (3) eine bestimmte Wellenlänge in einem vorgegebenen Verhältnis aufteilt.

14. Modul nach Anspruch 1 oder 12,
**dadurch gekennzeichnet,**
**daß** die zwei im Strahlengang (11) angeordneten Strahlteiler (3) wellenlängenselektive Strahlteiler sind.

15. Modul nach einem der Ansprüche 1 bis 14,
**dadurch gekennzeichnet,**
**daß** mindestens einem Lichtempfänger (2) ein optisches Sperrfilter (12) vorgeschaltet ist.

## Claims

1. Transmitting and receiving module for bidirectional optical message and signal transmission, having an opto-transmitter, a plurality of opto-receivers, a fibre connection for a common optical fibre, a lens coupling optics, and having beam splitters which are interposed in the free beam path and are arranged in a common housing, **characterized in that** arranged in the axial direction of the optical fibre (6) in the beam path (11) in the housing (5) between the fibre connection (4) and opposite opto-transmitter (1) are two beam splitters (3) which are inclined sequentially and in a mutually crossed fashion at an angle of 45° to the beam path (11), and which partially pass light of the same or different wavelength and partially deflect it in each case onto an opto-receiver (2) assigned to the respective beam splitter (3) at an angle of 90° to the beam path (11), and **in that** encapsulations (8) of the opto-receivers (2) overlap in the axial direction.

2. Transmitting and receiving module for bidirectional optical message and signal transmission, having an opto-transmitter, a plurality of opto-receivers, a fibre connection for a common optical fibre, a lens coupling optics, and having beam splitters which are interposed in the free beam path and are arranged in a common housing, **characterized in that** at least one further opto-transmitter (1) and/or opto-receiver (2) with associated lens coupling optics (7), and at least one further beam splitter (3) are provided in the common housing (5), and **in that** the beam splitters (3) are wavelength-selective filters which are arranged sequentially in the axial direction of the optical fibre and which are assigned in each case opto-transmitters (1) and/or opto-receivers (2) arranged transverse to the axial direction, and which selectively reflect light of an optical wavelength assigned to the respective opto-transmitters (1) and/or opto-receivers (2).

3. Module according to Claim 1 or 2, **characterized in that** the opto-transmitters (1) and the opto-receivers (2) are surrounded, forming an independent component in each case, by an encapsulation (8), and **in that** these independent components (1; 2) are installed with their encapsulations (8) in the common housing (5) with the beam splitters (3) and the lens coupling optics (7).

4. Module according to one of Claims 1 to 3, **characterized in that** the opto-transmitter (1) is a laser diode, the opto-receiver (2) is a photodiode, and their encapsulation (8) is a TO package in each case.

5. Module according to one of Claims 1 to 4, **characterized in that** the beam splitters (3) split up a specific optical wavelength at a prescribed ratio.

6. Module according to one of Claims 1 to 4, **characterized in that** the beam splitters (3) are wavelength-selective beam splitters.

7. Module according to one of Claims 1 to 6, **characterized in that** the opto-receiver (2) is provided in its encapsulation (8) with an amplifier circuit.

8. Module according to one of Claims 1 to 7, **characterized in that** the opto-receiver (2) is provided in its encapsulation (8) with a lens coupling optics (7).

9. Module according to one of Claims 1 to 8, **characterized in that** the optical fibre (6) has a lens coupling optics (10) which is arranged in the common housing (5).

10. Module according to one of Claims 1 to 9, **characterized in that** the lens coupling optics (9) for the opto-transmitter (1) is arranged inside or outside the encapsulation (8) of the latter, or is a part of the encapsulation of the latter.

11. Module according to one of Claims 1 to 10, **characterized in that** a further fibre connection is provided in the common housing (5) for the purpose of connecting an external opto-receiver.

12. Module according to one of Claims 2 to 11, **characterized in that** arranged in the axial direction of the optical fibre (6) in the beam path (11) in the housing (5) between the fibre connection (4) and opposite opto-transmitter (1) are two beam splitters (3) which are inclined sequentially and in a mutually parallel fashion at an angle of 45° to the beam path (11), and which partially pass light of the same or different wavelength and partially deflect it in each case onto an opto-receiver (2) assigned to the respective beam splitter (3) at an angle of 90° to the beam path (11).

13. Module according to Claim 1 or 12, **characterized in that** one beam splitter (3) arranged in the beam path (11) is a wavelength-selective beam splitter, and **in that** the other beam splitter (3) arranged in the beam path (11) splits up a specific wavelength at a prescribed ratio.

14. Module according to Claim 1 or 12, **characterized in that** the two beam splitters (3) arranged in the beam path (11) are wavelength-selective beam splitters.

15. Module according to one of Claims 1 to 14, **characterized in that** an optical stop filter (12) is connected upstream of at least one opto-receiver (2).

## Revendications

1. Module d'émission-réception pour transmission bidirectionnelle optique d'informations et de signaux comprenant un émetteur de lumière, plusieurs récepteurs de lumière, une connexion par fibre pour une fibre optique commune, une optique de couplage de lentilles et des diviseurs de faisceau intercalés dans la marche libre des rayons, qui sont disposées dans un boîtier commun,
**caractérisé en ce que**
dans la marche (11) des rayons dans la direction axiale de la fibre (6) optique il est disposé dans le boîtier (5) entre la connexion (4) par fibre optique et l'émetteur (1) optique opposé deux diviseurs de faisceau (3), l'un derrière l'autre et croisés l'un par rapport à l'autre, inclinés d'un angle de 45° par rapport à la marche (11) des rayons, diviseurs de faisceau qui laissent passer partiellement la lumière de longueurs d'ondes identiques ou différentes et la dévient partiellement à chaque fois sur un récepteur (2) de lumière attribué au diviseur (3) de faisceau correspondante en faisant un angle de 90° par rapport à la marche (11) des rayons, et **en ce que** des encapsulations (8) des récepteurs (2) de lumière se superposent dans la direction axiale.

2. Module d'émission-réception pour transmission bidirectionnelle optique d'informations et de signaux comprenant un émetteur de lumière, plusieurs récepteurs de lumière, une connexion par fibre pour une fibre optique commune, une optique de couplage de lentilles et des diviseurs de faisceau, qui sont intercalées dans la marche libre des rayons et disposées dans un boîtier commun,
**caractérisé en ce qu'**
il est prévu dans le boîtier (5) commun au moins un autre émetteur (1) de lumière et/ou récepteur (2) de lumière avec optique (7) de couplage de lentilles afférente et au moins un autre diviseur (3) de faisceau et **en ce que** les diviseurs (3) de faisceau sont des filtres sélectionnant des longueurs d'ondes disposés les uns derrière les autres dans la direction axiale de la fibre optique, filtres auxquels sont à chaque fois attribués des émetteurs (1) de lumière et/ou des récepteurs (2) de lumière disposés transversalement à la direction axiale et qui réfléchissent de façon sélective la lumière ayant respectivement aux émetteurs (1) de lumière et/ou récepteurs (2) de lumière.

3. Module selon la revendication 1 ou 2,
**caractérisé en ce que**
les émetteurs (1) de lumière et les récepteurs (2) de lumière, chacun d'eux étant formés d'un composant autonome, sont entourés par une encapsulation (8), et **en ce que** ces composants (1, 2) autonomes sont insérés avec leurs encapsulations (8) dans le boîtier (5) commun avec les diviseurs (3) de faisceau et l'optique (7) de couplage de lentilles.

4. Module selon l'une des revendications 1 à 3,
**caractérisé en ce que**
l'émetteur (1) de lumière est une diode laser, le récepteur (2) de lumière une photodiode et leur encapsulation (8) respectivement un boîtier TO.

5. Module selon l'une des revendications 1 à 4,
**caractérisé en ce que**
les diviseurs (3) de faisceau répartissent une longueur d'onde lumineuse donnée dans un rapport déterminé.

6. Module selon l'une des revendications 1 à 4,
**caractérisé en ce que**
les diviseurs (3) de faisceau sont des diviseurs de faisceau sélectionnant des longueurs d'ondes.

7. Module selon l'une des revendications 1 à 6,
**caractérisé en ce que**
le récepteur (2) de lumière dans son encapsulation (8) est pourvu d'un montage amplificateur.

8. Module selon l'une des revendications 1 à 7,
**caractérisé en ce que**
le récepteur (2) de lumière dans son encapsulation (8) est pourvu d'une optique (7) de couplage de lentilles.

9. Module selon l'une des revendications 1 à 8,
**caractérisé en ce que**
la fibre (9) optique présente une optique (10) de couplage de lentilles, qui est disposée dans le boîtier (5) commun.

10. Module selon l'une des revendications 1 à 9,
**caractérisé en ce que**
l'optique (9) de couplage de lentilles pour l'émetteur (1) de lumière est disposée à l'intérieur ou à l'extérieur de son encapsulation (8) ou fait partie de son encapsulation.

11. Module selon l'une des revendications 1 à 10,
**caractérisé en ce que**
dans le boîtier (5) commun une autre connexion par fibre est prévue pour la connexion à un récepteur optique externe.

12. Module selon l'une des revendications 1 à 11,
**caractérisé en ce qu'**
il est disposé dans la marche (11) des rayons dans la direction axiale de la fibre (6) optique dans le boîtier (5) entre la connexion (4) par fibre optique et l'émetteur (1) de lumière opposé deux diviseurs (3) de faisceau, l'un derrière l'autre et en parallèle, inclinés en faisant un angle de 45° par rapport à la marche (11) des rayons, diviseurs de faisceau qui laissent passer partiellement la lumière de longueur d'onde identique ou différente et la dévient partiellement respectivement sur un récepteur (2) de lumière attribué au diviseur de faisceau (3) correspondante en faisant un angle de 90° par rapport à la marche (11) des rayons.

13. Module selon la revendication 1 ou 12,
**caractérisé en ce que**
l'un des deux diviseurs de faisceau disposé dans la marche (11) des rayons est un diviseur de faisceau sélectionnant des longueurs d'ondes, et **en ce que** l'autre diviseur (3) de faisceau disposé dans la marche (11) des rayons répartit une longueur d'onde donnée dans un rapport déterminé.

14. Module selon la revendication 1 ou 12,
**caractérisé en ce que**
les deux diviseurs (3) de faisceau disposées dans la marche (11) des rayons sont des diviseurs de faisceau sélectionnant des longueurs d'ondes.

15. Module selon l'une des revendications 1 à 14,
**caractérisé en ce que**
au moins un filtre (12) d'arrêt optique est placé en amont d'un récepteur (2) de lumière.
